# EUROPEAN PATENT APPLICATION

(11) **EP 0 864 869 A1**
(43) Date of publication of application: **16.09.1998**
(21) Application number: 98102283.3
(22) Date of filing: 10.02.1998
(51) Int. Cl.: G01P 13/00

(54) **Displacement detector**

(30) Priority: 10.03.1997 GB 9705012
(71) Applicant: SHANDON SCIENTIFIC LIMITED, Runcorn Cheshire, WA7 1PR (GB)
(72) Inventor: Henville, Michael Ian, Oakham, Rutland LE15 6BU (GB)
(74) Representative: Howden, Christopher Andrew

(57) **Abstract**

A centrifuge or other vibration-prone apparatus (20) incorporates a detector (18) for detecting movement of the device over a surface (44) supporting the device. The detector comprises a ball (24) engaging the surface (44) and supporting, by way of a laterally flexible bound-coil spring (38), acting as a vertical strut, a plunger (34) on the upper surface of which bear the operating levers of microswitches (40). The ball (24) and plunger (34) are guided for vertical sliding in a sleeve (22) supported by the apparatus. In the event of a transverse displacement of the apparatus, the ball (24) rolls along the supporting surface (44), laterally displacing the lower end, bearing on the ball (24), of the spring (34) so that it no longer serves as a vertical strut supporting the plunger (34), and as a result the plunger (34) drops under its weight and the bias provided by the microswitches, so that the latter switch off the motor of the centrifuge or like device (20).

## Description

THIS INVENTION relates to a detector for detecting movement of an object over a supporting surface.

It is well known that certain pieces of apparatus which are subject to vibration, for example because of the operation of internal mechanisms which they incorporate, have a tendency to move gradually across a supporting surface on which they rest. An example of such an apparatus is a laboratory centrifuge. If a laboratory centrifuge is mis-loaded by the operator, there is the possibility that the resulting vibration whilst the centrifuge is spinning may cause the centrifuge to move or "walk" across the laboratory bench surface or other surface on which it rests. Such movement, if not checked, may lead to an accident or damage caused by the centrifuge moving over the edge of the bench and falling or by the centrifuge displacing some other object, leading to spillages or breakages, for example. Similar risks attend the operation of other apparatuses prone to vibration, whether in a laboratory context, in factories, in the home or in some other scenario and in which the same problem, in one form or another, arises. The present invention is applicable to any or all of these various apparatuses and objects in their various contexts. The invention is also applicable to the detection of the motion of objects which are not, or not particularly prone to vibration, but of which motion may usefully be detected for some other purpose, for example for security reasons or as part of an anti-theft or alarm system.

It is an object of the present invention to provide a detector for detecting movement of an object over a supporting surface which is reliable in operation and can be manufactured and assembled inexpensively.

According to one aspect of the invention there is provided a detector for detecting movement of an object over a supporting surface, including a member adapted to be carried by such object and to engage such surface when the object is resting thereon, the member being supported by mounting means for rotational or pivotal movement occasioned by displacement of the object, with said mounting means, along said surface, said detector including means for detecting such rotational or pivotal movement of said member.

According to another aspect of the invention there is provided an object incorporating a detector according to the above-noted aspect, the object having a base or foot for engagement with such supporting surface, said base or foot being hollow or having its bottom surface recessed to accommodate said rotatable or pivotal member, the latter member being arranged when the object is supported on a supporting surface by said base or foot, to engage said surface within the region circumscribed by said base or foot.

An embodiment of the invention is described below by way of example with reference to the accompanying drawings in which:-
FIGURE 1 is a fragmentary view in vertical section of an item of laboratory apparatus incorporating a movement detector embodying the invention, the section being taken along the line A-A in Figure 3,
FIGURE 2 is a view in vertical section along the line C-C in Figure 3 and showing the movement detector in side elevation,
FIGURE 3 is a plan view of the portion of the apparatus illustrated in Figures 1 and 2,
FIGURE 4 is an exploded perspective view illustrating the construction of the movement detector, and
FIGURE 5 is a diagrammatic vertical section view illustrating the movement detector after it has been triggered.

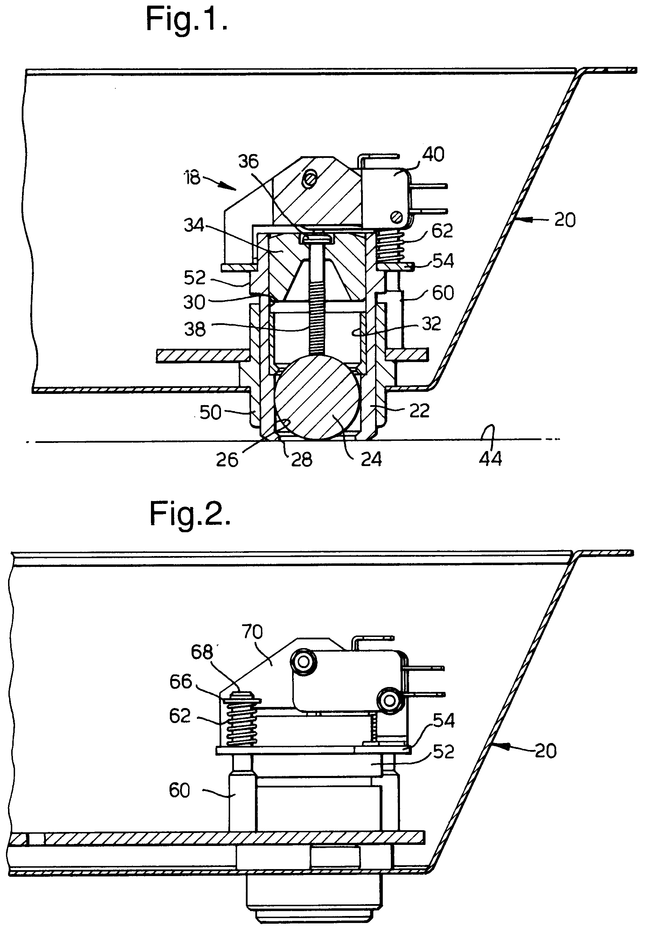

The structure indicated at 20 in Figures 1 to 4 comprises part of the base of a motorised item of laboratory apparatus, such as a laboratory centrifuge.

The centrifuge partially illustrated in Figures 1 to 4 includes a displacement sensor or detector indicated generally at 18. The sensor 18 comprises a generally cylindrical hollow sleeve 22, disposed with its axis vertical, and accommodating therein a ball 24 having a high friction surface, for example having a coating of silicone rubber. As shown in Figure 1, the ball 24 is a free fit within a lower bore portion 26 of the sleeve 22, which bore portion 26 terminates in an inwardly turned lip 28 at the lower end of the sleeve and which defines an opening of a diameter somewhat less than the diameter of the ball 24. Thus, the ball 24 can project, through this opening, beyond the level of the lower end surface of the sleeve 22 but cannot pass downwardly entirely through the sleeve. Above the bore portion 26 of the sleeve 22, a bore portion 30 of somewhat larger diameter accommodates an intermediate sleeve 32. The intermediate sleeve 32 also terminates in a radially inwardly turned lip at its lower end, defining an opening which is again slightly less in diameter than the diameter of the ball 24. The sleeve 32 serves, *inter alia*, to limit upward movement of the ball 24 relative to the sleeve 22. The bore portion 30 extends to the upper end of the sleeve 22 to define an opening, at said upper end, which is occupied by a plunger 34 which fits closely within the bore portion 30 as a free sliding fit therein. The plunger 34 has a screw 36 extending axially through a screw threaded axial bore in the plunger 34. The screw 36 carries, at its lower end, a laterally deflectable strut in the form of a helical spring 38. A pair of microswitches 40 have their respective operating levers or actuators bearing upon the upper surface of the plunger 34 which is exposed at the upper end of the sleeve 22. The microswitch actuators thereby apply a downward force to the plunger 34 which, in conjunction with the weight of the plunger 34, provides a downward bias acting on the plunger.

As illustrated in Figure 1, the lower end of the sleeve 22 is adapted to engage a horizontal surface 44 on which the centrifuge rests by means of supporting feet, (not shown). The surface 44 may, for example, be the upper surface of a laboratory bench. The ball 24 rests upon this surface within the confines of the opening at the lower end of the sleeve 22, whilst the lower end of spring 38 rests upon the uppermost portion of the surface of the ball, centred on the axis of the detector, the spring 38 acting as a strut whereby the plunger 34 is supported, from the ball 24, in an uppermost position. The spring 38 is preferably one in which, when the spring is not subjected to an external force, the turns are bound, (i.e. in direct contact with each other), whereby the spring cannot be compressed axially in this condition. Indeed, the spring is preferably so formed that the resilience of the spring material provides a bias forcing adjacent turns of the coil together. The upper end of the spring 38 is effectively threaded onto the lower screw threaded end of the screw 36, the arrangement being such that the screw pitch of the screw 36 is slightly greater than the coil pitch of the spring in its natural state whereby the upper end portion of the spring is stretched slightly, resiliently, to fit the thread of the screw 36 as the latter is screwed in, thereby retaining the spring reliably on the screw.

The spring 38 is readily bent or flexed, allowing the detector to operate in the following manner.

In the position shown in Figure 1, as indicated above, the spring 38 acts as a strut, holding the plunger 34 in an uppermost position. If, however, the centrifuge is displaced laterally across the surface 44 on which it rests, for example by out-of-balance or vibratory forces during operation, the ball 24, entrained by the sleeve 22, is thereby caused to roll over the surface 44 and consequently the lower end of the spring 38 is displaced laterally by frictional contact with the ball 24 and follows the ball surface as the ball rolls until the position shown in Figure 5 is reached in which the plunger 34 engages the upper end of sleeve 32. It will be understood that, as the lower end of the spring 38 moves laterally, a downward vertical displacement of the plunger 34 under its weight and the bias supplied by the microswitches 40 allow the lower end of the spring to follow the concurrent downward movement of the part of the ball surface engaged by the spring as the ball rolls, to reach the position shown in Figure 5. This downward movement of the plunger 34 is sufficient to operate the microswitches 40, which are connected in a circuit (not shown) controlling energisation of the centrifuge motor, whereby such motor is de-energised and the centrifuge allowed or caused to come to rest, upon such operation of the microswitches. (Operation of the microswitches 40, (or one of the microswitches, since one is normally sufficient), may, of course, simply be arranged to operate an alarm, for example, and this option may be preferred where, for example, such a movement detector is utilised simply as a security or anti-theft measure. In the latter context, it will be appreciated that if the object carrying the detector is lifted from its supporting surface, the ball will drop, and with it the plunger 34 and spring 38, again operating the microswitches).

The sleeve 30, in addition to limiting upward movement of the ball 24, also serves to limit downward movement of the plunger 36. By limiting upward movement of the ball 24, the intermediate sleeve 32 prevents damage to the spring 38 if the ball 24 is forcibly pushed back (upwardly) into the sleeve 22 whilst the spring 38 is in its bent, deflected condition.

The movement detector 18 can be reset, to revert to the condition shown in Figure 1, simply by lifting the entire centrifuge slightly from the supporting surface and setting it down again. The lifting of the centrifuge from the supporting surface allows the ball 24 to fall downwardly, until arrested by the lip 28, the ball 24, in such downward movement, moving clear of the spring 38 and allowing it to return, by its inherent resilience, to a position in which it is again centred on the axis of the sleeve 22. Upon setting the centrifuge down again on the surface 44, the ball 24 is raised, relative to the sleeve 22, to engage the lower end of the spring 38 once more at a position substantially on the vertical central axis of the sleeve 22.

In the preferred embodiment illustrated, in order to ensure that, normally, the lower end of the sleeve 22 is fully engaged with the supporting surface 44, (despite, for example, any irregularities in such surface or manufacturing variations in the dimensions of the feet of the centrifuge), the sleeve 22 is itself guided for limited vertical displacement in a bearing sleeve 50 fixed to the structure 20.

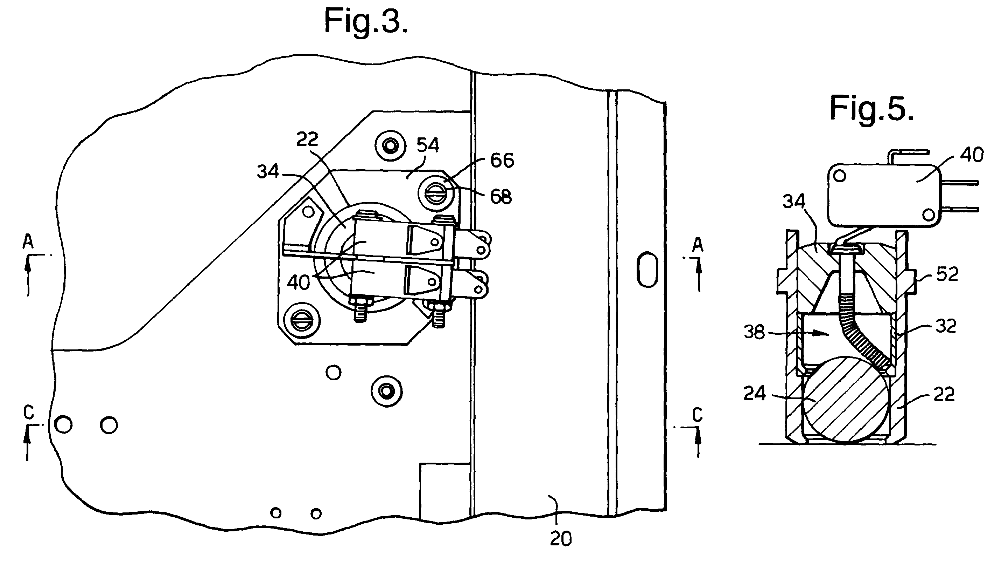

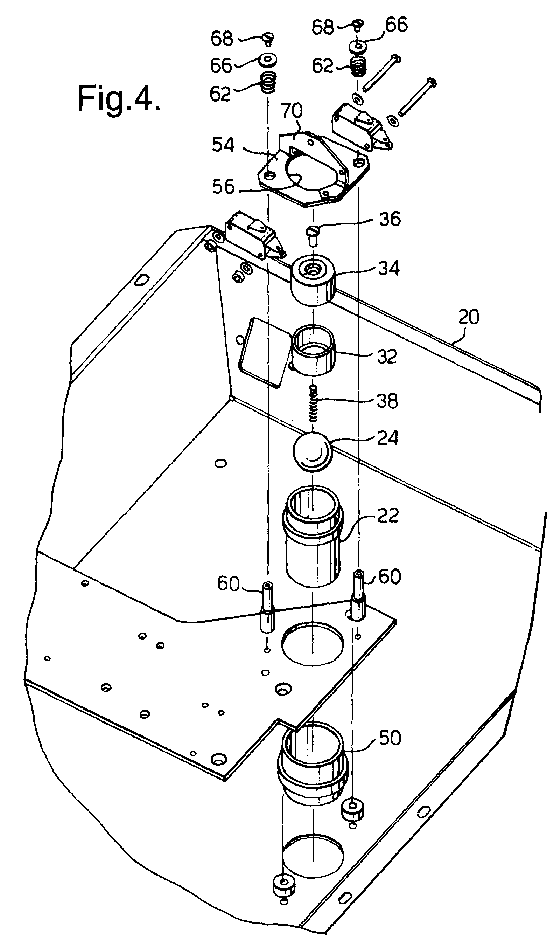

As illustrated in Figures 2, 3 and (in exploded view) Figure 4, the sleeve 22 has, adjacent its upper end, an external peripheral collar 52 and a mounting plate 54 has a central aperture 56 through which the upper end of sleeve 22 projects, the mounting plate 54 bearing, by the region thereof surrounding said aperture 56, upon the upper surface of the collar 52. Rods 60 fixed at their lower ends to the centrifuge structure extend vertically, with clearance, through holes in the mounting plate 54 and carry helical compression springs 62 which bear upon the mounting plate 54 at their lower ends and which at their upper ends bear against the undersides of washers 66 secured by screws 68 to the upper ends of these rods 60. Thus, the springs 62 urge the mounting plate 54 and hence the sleeve 22 downwardly relative to the centrifuge structure 20 to ensure that the lower end of the sleeve 22 engages the supporting surface 44. The bodies of the microswitches 40 are mounted on a vertical plate 70 upstanding from and integral with the apertured mounting plate 54 which engages the annular collar 52. Accordingly, the microswitch bodies follow any vertical movement of the sleeve 22.

Whilst, as described above, the movement detector may be reset by lifting the whole centrifuge and setting it down again, resetting means (not shown) may alternatively or additionally be provided which raises the sleeve 22 relative to the structure 20 and sleeve 50, to raise the plunger 34 and spring 38 relative to the ball and subsequently to lower the sleeve 22 again, or which raises the plunger 34 and with it the spring 38, into their original positions shown in Figure 1, relative to the sleeve 22 and structure 20. Such resetting means may, for example, be linked to the lid (not shown) of the centrifuge, so that the detector is reset by opening and closing the lid of the centrifuge. It will be appreciated that in all of these variants, resetting involves directly or indirectly raising the plunger 34 and spring 38 away from the ball before lowering the plunger and spring again to allow the spring to re-engage the ball.

The features disclosed in the foregoing description, in the following claims and/or in the accompanying drawings may, both separately and in any combination thereof, be material for realising the invention in diverse forms thereof.

## Claims

1. A detector for detecting movement of an object over a supporting surface, including a member adapted to be carried by such object and to engage such surface when the object is resting thereon, the member being supported by mounting means for rotational or pivotal movement occasioned by displacement of the object, with said mounting means, along said surface, said detector including means for detecting such rotational or pivotal movement of said member.

2. A detector according to claim 1 which is arranged to be triggered from a first to a second state upon such pivotal or rotational movement of said member, to provide detection of such movement, and is arranged to be reset to its first state by lifting the object from said supporting surface and setting it down again.

3. A detector according to claim 1 which is arranged to be triggered from a first to a second state upon such pivotal or rotational movement of said member, to provide detection of such movement, and is arranged to be reset to its first state by operation of resetting means associated with the object.

4. An object incorporating a detector according to any of claims 1 to 3, the object having a hollow sleeve for engagement with such supporting surface, said sleeve providing at its lower end a recess which accommodates said rotatable or pivotal member, the latter member being arranged when the object is supported on a supporting surface engaged by the lower end of said hollow sleeve, to engage said surface within the region circumscribed by the lower end of said hollow sleeve.

5. A detector according to any of claims 1 to 3 or an object according to claim 4, wherein said member is a freely rotatable ball and means for detecting rotational movement of the ball is arranged to be operable by rotation of the ball on such supporting surface, in any direction.

6. A detector or object according to claim 5, wherein in a normal, untriggered condition, the ball supports, via flexible strut means frictionally engaging the highest region of the surface of the ball, a plunger guided for vertical movement, and the detector includes means for detecting such vertical movement of the plunger, whereby rolling movement of the ball, consequent upon displacement of the object on said supporting surface, will laterally displace and simultaneously lower the level of the region of engagement of said strut means with the ball, causing or allowing lowering of said plunger, to be detected by said means for detecting vertical movement of the plunger.

7. A detector or object according to claim 6 wherein said ball is mounted for vertical play, relative to said strut, when not loaded by the weight of said plunger and said strut is resiliently biased towards a central position, whereby the detector can be re-set simply by lifting the object to allow the ball to fall away from said strut to permit the latter to return, under said bias, to its central position and thereafter said object can be lowered onto said supporting surface again to lower the centralized strut, with said object, onto the ball after the latter has engaged said surface.

8. A detector or object according to claim 6 wherein said ball is mounted for vertical play, relative to said strut, when not loaded by the weight of said plunger and said strut is resiliently biased towards a central position, whereby the detector can be re-set, by raising said plunger and said flexible strut, relative to the ball and to said supporting surface, to permit the strut to return, under its resilient bias, to its central position, and thereafter lowering the plunger and strut to engage the ball again.

9. A detector or object according to claims 6, 7 or 8 wherein said flexible strut means comprises a bound-coil spring.

10. An object according to any of claims 4 to 9 which comprises a centrifuge or other vibration-prone machine.
